# EUROPÄISCHE PATENTSCHRIFT

(11) **EP 2 334 163 B1**
(45) Veröffentlichungstag und Bekanntmachung des Hinweises auf die Patenterteilung: **20.09.2017**
(21) Anmeldenummer: 09777721.3
(22) Anmeldetag: 07.08.2009
(51) Int. Cl.: A01D 34/416

(54) **FADENTRIMMER**
THREAD TRIMMER
COUPE-FIL

(30) Priorität: 22.08.2008 DE 102008039192
(43) Veröffentlichungstag der Anmeldung: 22.06.2011
(73) Patentinhaber: Husqvarna AB, 56182 Huskvarna (SE)
(72) Erfinder: BAUR, Günter, 89134 Blaustein (DE); FRITZ, Reinhard, 89195 Staig (DE); GUNGL, Johannes, 89079 Ulm (DE); LOCHER, Ottmar, 89079 Ulm (DE); RUDOLF, Peter, 89250 Senden (DE)
(86) Internationale Anmeldenummer: PCT/EP2009/005725
(87) Internationale Veröffentlichungsnummer: WO 2010/020356

(56) Entgegenhaltungen:
- DE-A1- 2 855 990
- FR-A1- 2 551 039
- US-A- 4 287 670
- US-A- 5 036 648

## Beschreibung

Die Erfindung betrifft einen Fadentrimmer mit einer Fadenspule und einer Spulenaufnahme.

Gebräuchliche Ausführungen von Fadentrimmern enthalten eine Fadenspule mit einem in mehreren Lagen aufgewickelten Vorratsfaden. Die Fadenspule ist in einem motorisch angetriebenen Spulenhalter auswechselbar gehalten. Ein freies Ende des Fadens ist durch eine Öffnung in dem Spulenhalter nach außen geführt und bei rotierend angetriebenem Spulenhalter durch die Fliehkraft radial straff gespannt und schneidet das Pflanzengut. Der Faden besteht typischerweise aus Kunststoff. Im Schneidbetrieb verkürzt sich das frei fliegende Ende des Schneidfadens. Von der Vorratsspule kann der Faden ein Stück abgewickelt werden, um wieder die für den Schneidbetrieb erforderliche Länge des frei fliegenden Endes zu erreichen. Für die schrittweise Abwicklung des Fadens von der Vorratsspule sind automatische oder teilautomatische Mechanismen bekannt. Bei der schrittweisen Abwicklung von Faden von der Vorratsspule wird die Vorratsspule relativ zu dem Spulenhalter verdreht.

Die US-A-5036648 offenbart einen Schneidkopf für ein Pflanzenschneidgerät, bei dem ein Schneidfaden an einer Spule in einem Gehäuse angeordnet ist und zwischen einer Abzugsstelle des Schneidfadens von der Spule und einer Durchtrittsöffnung im Gehäuse mindestens ein im Querschnitt vorzugsweise abgerundeter Umlenkbügel vorgesehen ist, durch den der Schneidfaden geführt ist. Hierdurch kann erreicht werden, dass die auf die Spule über den abgezogenen Faden einwirkende Fadenkraft in gewünschter Weise reduziert wird, so dass unerwünschte Erwärmungen des Fadens infolge erhöhtem Verschleißes oder zu starke Reibungen und eine damit verbundene Verschweißung aufgewickelter Fäden vermieden werden kann.

Ferner ist aus der Schrift DE-A-2855990 ein Fadentrimmer bekannt, bestehend aus einem antreibbaren Spulenhalter mit einer Mehrzahl von Windungen eines Kunststoffschneidfadens, der durch eine Fadenöffnung des Spulenhalters nach außen geführt ist, wobei zwischen der Fadenöffnung und der Fadenwicklung auf der Spule Vibrationsdämpfungsmittel mit einer zusätzlichen Reibfläche als Umlenkfläche angeordnet ist, die eine Ausbreitung von Vibrationen längs des Schneidfadens dämpfen. Die Fadenöffnung wird durch zwei Verschleißringe gebildet, die eine Hülse darstellen. Die Umlenkfläche einer Rolle ist so positioniert, dass der Umlenkwinkel des Schneidfadens am Hülsenrand von der Fadenrichtung in der Durchtrittsöffnung zur Richtung des Fadenabschnitts zwischen Umlenkfläche und Hülse mehr als 60° beträgt.

Ferner ist aus der Schrift FR-A-2551039 ein gattungsgemäßer Fadentrimmer bekannt.

Es zeigt sich bei derartigen Anordnungen, dass der Kunststofffaden häufig innerhalb des Spulenhalters bricht, was für den Benutzer ein aufwändiges Entnehmen der Spule und, soweit möglich, wieder Herstellen eines freien Fadenendes und Durchfädeln durch die Öffnung im Spulenhalter bedeutet.

Der Erfindung liegt die Aufgabe zugrunde, einen Fadentrimmer anzugeben, bei welchem die Gefahr solcher innenliegender Fadenbrüche erheblich reduziert ist.

Die Erfindung ist im unabhängigen Patentanspruch beschrieben. Die abhängigen Ansprüche enthalten vorteilhafte Ausgestaltungen und Weiterbildungen der Erfindung.

Es werden vibrationsdämpfende Mittel zwischen einer Fadendurchführungsöffnung im Spulenhalter und einem Spulenwickel eingefügt, so dass im Betrieb des Schneidfadens an dessen freiem Ende Schwingungen oder Vibrationen induziert werden, welche sich über den im Betrieb straff gespannten Faden bis zum Spulenwickel fortsetzen und dort, insbesondere im Bereich des tangentialen Anliegens des wegführenden Fadenendes, insbesondere wiederum im Winkeln zwischen radial und axial benachbarten Fadenwicklungen zu Reibverschweißungen führen, welche zum einen durch die dabei entstehende lokale Schwächung des Kunststoffmaterials und zum anderen durch bei manuellem Zug des Benutzers an dem freien Ende auftretenden höheren Kräften zu einem Fadenbruch führen können. Durch die vorgesehenen Vibrationsdämpfungsmittel zwischen der Fadendurchführungsöffnung durch den Spulenhalter und dem Spulenwickel werden solche Vibrationen auf dem Weg vom frei fliegenden Ende des Schneidfadens zu der Position des gespannt am Spulenwickel anliegenden wegführenden Abschnitts des Schneidfadens gedämpft und damit die Neigung zu Verschweißungen an dieser Stelle erheblich verringert. Bei sonst gleichen Arbeitsbedingungen zeigt sich eine Verringerung des Auftretens solcher Verschweißungen um annährend den Faktor 50.

Der Faden wird auf einer kontinuierlich gekrümmten Umlenkfläche der Umlenkstruktur geführt, wobei der Krümmungsradius der Umlenkfläche oder, bei variierendem Krümmungsradius der mittlere Krümmungsradius auf welchem im Betrieb der Schneidfaden an der Umlenkstruktur anliegt, wesentlich kleiner ist als der kleinste Radius der Fadenwicklung des Spulenwickels und weniger als 40 %, insbesondere höchstens 30 %, vorzugsweise höchstens 20 % eines solchen Wicklungsradius beträgt.

Erfindungsgemäß ist dabei die Umlenkfläche von der Anlagefläche in Umfangsrichtung um die Rotationsachse um einen Winkel versetzt, wobei der Winkel kleiner als 50° ist und wobei der mittlere Krümmungsradius der Umlenkfläche im Wesentlichen dem mittleren Krümmungsradius der Anlagefläche entspricht.

Die Vibrationsdämpfungsmittel umfassen eine oder mehrere Reibflächen im Verlauf des Schneidfadens zwischen der Fadendurchführungsöffnung und dem Spulenwickel zusätzlich zu der auch bei bekannten Ausführungen vorhandenen Anlagefläche des Schneidfadens am Rand der Fadendurchführungsöffnung. Die Reibflächen verursachen vorteilhafterweise eine in Längsrichtung des Fadens wirkende und daher eine oszillierende Längsbewegung des Fadens dämpfende zusätzliche Reibungskraft, welche bei maximaler Drehzahl des Spulenhalters vorteilhafterweise wenigstens 20 %, insbesondere wenigstens 30 %, vorzugsweise wenigstens 40 % der maximalen Fliehkraft beträgt, welche am Durchtritt des Schneidfadens durch die Fadendurchführungsöffnung auftritt und die durch die maximale, typischerweise im Leerlauf auftretende Drehzahl des Spulenhalters und die Masse des frei fliegenden Fadenendes voller Länge bestimmt ist. Die bei bekannten Ausführungen von Fadentrimmern durch Anlage des Schneidfadens an dem Rand der Fadendurchführungsöffnung auftretenden Reibungskräfte sind demgegenüber typischerweise gering und auch nicht beabsichtigt. Die Höhe der zusätzlichen Reibungskraft ist in bekannter Weise durch den Reibungskoeffizienten des Kunststoffs des Schneidfadens auf der wenigstens einen Reibfläche, die Größe der Reibfläche und die durch die Fliehkraft und die Geometrie der Anordnung, insbesondere den Umschlingungswinkel des Schneidfadens um eine gekrümmte Reibfläche oder durch andere Mittel bewirkte Andrückkraft zwischen Reibfläche und Schneidfaden bestimmt. Die Gesamt-Reibungskraft soll so klein bleiben, dass die bei verkürztem Schneidfaden verringerte Fliehkraft zuverlässig den Schneidfaden zur Verlängerung nach außen ziehen kann.

In besonders vorteilhafter Ausführung enthalten die Vibrationsdämpfungsmittel eine Umlenkstruktur, welche eine radial zwischen Spule und Innenwand des Spulenhalters angeordnete, gegen die Fadendurchführungsöffnung durch den Spulenhalter winkelversetzte Umlenkstruktur enthält, um welche der Schneidfaden zwischen der Fadendurchführungsöffnung durch den Spulenhalter und dem Spulenwickel umgelenkt geführt ist. Vorteilhafterweise ist eine solche Umlenkstruktur um wenigstens 5°, insbesondere wenigstens 10°, vorzugsweise wenigstens 15° gegen die Anlagefläche des Schneidfadens am inneren Rand der Fadendurchführungsöffnung im Spulenhalter um die gemeinsame Rotationsachse von Spule und Spulenhalter versetzt angeordnet.

Der Faden wird auf einer kontinuierlich gekrümmten Umlenkfläche der Umlenkstruktur geführt, wobei der Krümmungsradius der Umlenkfläche oder, bei variierendem Krümmungsradius der mittlere Krümmungsradius auf welchem im Betrieb der Schneidfaden an der Umlenkstruktur anliegt, wesentlich kleiner ist als der kleinste Radius der Fadenwicklung des Spulenwickels und vorteilhafterweise höchstens 40 %, insbesondere höchstens 30 %, vorzugsweise höchstens 20 % eines solchen kleinsten Wicklungsradius beträgt.

Der Krümmungsradius oder mittlere Krümmungsradius der Fläche, an welcher der Schneidfaden an der Umlenkstruktur anliegt, liegt zwischen dem 2-fachen und dem 0,5-fachen des Krümmungsradius der Fläche, an welcher der Faden beim Übergang von der Fadendurchführungsöffnung in Richtung der Umlenkstruktur an dem gekrümmten Rand der Fadendurchführungsöffnung, welcher durch eine metallische Hülse gebildet sein kann, anliegt.

Die Umlenkstruktur bewirkt unter anderem eine erhöhte Reibungskraft des Schneidfadens sowohl an dem Rand der Fadendurchführungsöffnung als auch an der Umlenkfläche selbst.

In anderer Ausführung kann eine zusätzliche Reibungskraft, welche insbesondere Längsvibrationen auf dem Schneidfaden dämpft, auch durch eine reibschlüssige Einklemmung des Schneidfadens, insbesondere in einer Federanordnung, zwischen der Fadendurchführungsöffnung und dem Spulenwickel erfolgen. Die Reibungskräfte müssen aber so niedrig bleiben, dass die bei durch Verschluss kürzerem Faden verringerte Fliehkraft ausreicht, den Faden zur Verlängerung nach außen zu ziehen.

Die Umlenkstruktur ist in bevorzugter Ausführung durch einen zylindrischen metallischen Stift gebildet, dessen Stiftachse parallel zu der Spulenachse der Fadenspule verläuft.

Die Erfindung ist nachfolgend anhand eines bevorzugten Ausführungsbeispiels unter Bezugnahme auf die Abbildung noch eingehend veranschaulicht.
- Fig. 1: eine axiale Ansicht einer Spule in einem Spulenhalter,
- Fig. 2: eine Seitenansicht der Anordnung nach Fig. 1,
- Fig. 3: einen vergrößerten Ausschnitt aus Fig. 1,
- Fig. 4: Kontaktsituationen von Fadenwindungen.

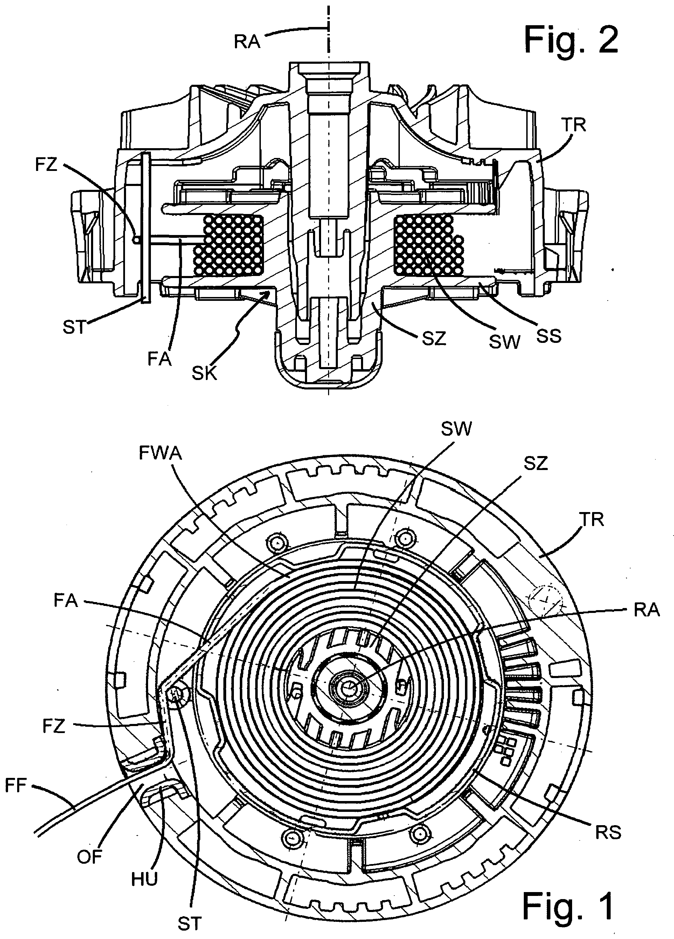

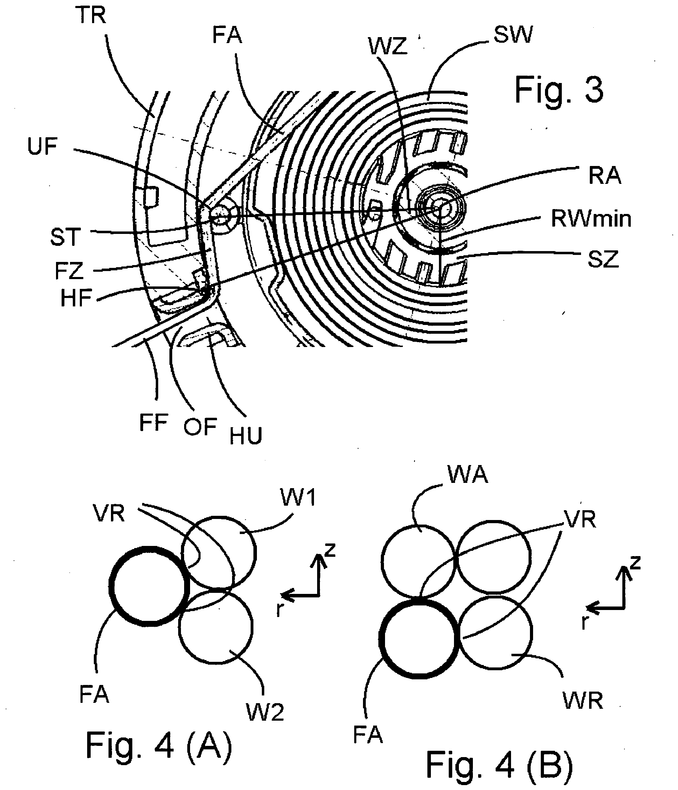

Fig. 1 zeigt eine Fadenspule in einem Spulenhalter TR mit Blickrichtung in Richtung der Rotationsachse des Spulenhalters TR. Fig. 2 zeigt eine Seitenansicht als Schnitt in einer die Rotationsachse RA enthaltenen Ebene. Fig. 3 zeigt einen vergrößerten Ausschnitt aus Fig. 1.

Die Fadenspule enthält einen Spulenkörper SK mit einem zylindrischen Mittelteil SZ und von diesem im wesentlichen radial senkrecht zur Rotationsachse RA nach außen ragenden Scheiben, welche einen Wickelraum für den zu einem Spulenwickel SW mit in axialer und radialer Richtung mehreren Windungen aufgewickelten Schneidfaden bildet. Der Schneidfaden ist mit seinem inneren Ende an dem Spulenkörper festgelegt und mit seinem äußeren Ende durch eine Fadendurchführungsöffnung OF in einer Seitenfläche des Spulenhalters TR hindurch geführt. Der Schneidfaden reicht mit einem frei fliegenden Ende FF aus der Fadendurchführungsöffnung OF radial nach außen. Das frei fliegende Ende ist bei Rotation des Spulenhalters TR durch Fliehkräfte im wesentlichen radial gespannt und entgegen der Drehrichtung der Rotation gekrümmt. Die Fadendurchführungsöffnung OF ist typischerweise durch eine Metallhülse HU gebildet, welche in eine Bohrung des gewöhnlich aus Kunststoff bestehenden Spulenhalter TR eingesetzt ist. Der Spulenwickel SW kann durch einen Ring RS eingefaßt sein, welcher vor Einsetzen der Spule ein Aufweiten und Verwirren der Fadenwindungen verhindert. Die Spule ist innerhalb des Spulenhalters schrittweise um ihre typischerweise mit der Rotationsachse zusammenfallende Spulenachse drehbar, um den Schneidfaden weiter von der Spule abzuwickeln und das durch Verschleiß verkürzte frei fliegende Ende des Schneidfadens wieder zu verlängern. Mechanismen hierfür sind bekannt und gebräuchlich.

Entgegen gebräuchlichen Anordnungen, bei welchen die äußerste Windung FWA des Schneidfadens auf dem Spulenwickel tangential vom Spulenwickel weg direkt zu der Fadendurchführungsöffnung OF bzw. der diese bildenden Hülse HU geführt ist, ist wesentlich für die skizzierte Ausführung der Erfindung, dass gegenüber diesem direkten Verlauf der Schneidfaden von der äußersten Spulenwindung FWA über eine Umlenkstruktur geführt ist und von der kürzesten Verbindung als Tangente von der Hülse HU an den Spulenwickel abweicht. Der Schneidfaden besitzt eine durch das Kunststoffmaterial und den Fadenquerschnitt bestimmte Eigensteifigkeit und ist in seinem Verlauf über die Umlenkstruktur in dem erforderlichen Maß elastisch verformbar.

Im skizzierten Beispiel ist eine solche Umlenkstruktur durch einen Stift ST gebildet, welcher radial zwischen dem äußersten Umfang der Spule und der Innenwand des Spulenhalters,angeordnet ist und relativ zu der Fadendurchführungsöffnung OF um die Rotationsachse RA winkelversetzt positioniert ist. Der Stift ST bildet für den um ihn umgelenkten Schneidfaden mit der Außenfläche des Stiftes eine Umlenkfläche, an welcher der Schneidfaden im bei rotierendem Spulenhalter gespannten Zustand anliegt. Ein Fadenabschnitt zwischen der Umlenkfläche und dem Spulenwickel, welcher im wesentlichen tangential zum Spulenwickel verläuft, ist mit FA bezeichnet. Ein Fadenabschnitt zwischen der Umlenkfläche und der Anlagefläche des Fadens an der Hülse HU ist mit FZ bezeichnet. Die Fadenabschnitte FA und FZ können im Betrieb bei gespanntem Faden als im wesentlichen gerade Fadenabschnitte angesehen werden und bilden miteinander einen Innenwinkel von vorteilhafterweise höchstens 150°, vorzugsweise höchstens 135°. Der Innenwinkel zwischen FA und FZ nimmt mit fortschreitender Abwicklung des Schneidfadens von dem Spulenwickel ab.

Die Umlenkfläche UF der Umlenkstruktur mit dem vorzugsweise metallischen Stift ST ist kontinuierlich gekrümmt und besitzt einen mittleren Krümmungsradius, welcher im besonders vorteilhaften Spezialfall einer Kreisbogenform der Krümmung der Umlenkfläche gleich dem konstanten Kreisbogenradius ist. Die Verwendung eines Stiftes ST mit kreisförmigem Querschnitt ist besonders günstig.

Der Windungsradius der einzelnen Windungen variiert je nach Verbrauchszustand des Spulenwickels. Der minimale Windungsradius RWmin ist durch den Radius der radial nach außen weisenden Wand des zylindrischen Mittelteils SZ des Spulenkörpers gegeben. Der mittlere Krümmungsradius der Umlenkfläche UF ist wesentlich kleiner als der kleinste Windungsradius RWmin und beträgt höchstens 40 %, insbesondere höchstens 30 %, vorzugsweise höchstens 20 % des kleinsten Windungsradius RWmin.

Die Hülse HU um die Fadendurchführungsöffnung OF im Spulenhalter TR bildet eine gleichfalls gekrümmte Anlagefläche HF für den Schneidfaden. Die Anlegefläche HF zwischen dem Fadenabschnitt FZ und dem frei fliegenden Fadenende FF besitzt einen mittleren Krümmungsradius, wobei der mittlere Krümmungsradius der Umlenkfläche UF zwischen dem 2-fachen und dem 0,5-fachen des mittleren Krümmungsradius der Anlagefläche HF liegt. Vorzugsweise ist der mittlere Krümmungsradius der Umlenkfläche UF kleiner als der mittlere Krümmungsradius der Anlagefläche HF. Die Anlagefläche HF in der skizzierten Anordnung ist durch die Umlenkung des Schneidfadens in Richtung des Stiftes ST wesentlich größer als die Anlagefläche des Schneidfadens an der Hülse bei gebräuchlicher Führung des Schneidfadens von dem Hülsenrand direkt tangential an den Spulenwickel. Der Umlenkwinkel des Schneidfadens am Hülsenrand von der Fadenrichtung in der Fadendurchführungsöffnung zur Richtung des Fadenabschnitts FZ beträgt mehr als 60°.

Die Umlenkfläche UF ist von der Anlagefläche HF durch den Fadenabschnitt FZ beabstandet und in Umfangsrichtung um die Rotationsachse RA um einen Winkel WZ versetzt. Der Winkel WZ beträgt vorteilhafterweise wenigstens 5°, insbesondere wenigstens 10°, vorzugsweise wenigstens 15°. Jedenfalls ist der Winkel WZ kleiner als 50°.

Durch die Umlenkung des Schneidfadens werden in dem frei fliegenden Ende FF im Betrieb induzierte Vibrationen gegenüber Anordnungen mit Fadenführungen von der Hülse HU tangential an den Spulenwickel durch die stärkeren Umlenkungen sowohl an der Anlagefläche HF als auch insbesondere an der Umlenkfläche UF, durch erhöhte Reibung an der Anlagefläche HF und der Umlenkfläche UF und/oder durch Vibrationsdämpfung innerhalb des Fadenabschnittes FZ nur noch stark abgeschwächt auf den Fadenabschnitt FA und dessen Anlage an anderen Fadenwindungen übertragen und die Neigung zum Verschweißen wird stark verringert.

Fig. 4 zeigt zwei Beispiele für typische Anlagepositionen mehrerer Fadenwindungen auf dem Spulenwickel, wobei der tangential auf den Spulenwickel laufende Fadenabschnitt FA durch eine verstärkte Umrißlinie hervorgehoben ist. Die Richtung der Rotationsachse ist mit z, die radiale Richtung mit r angegeben.

In Fig. 4(A) liegt der Fadenabschnitt FA in dem Winkel zwischen zwei radial benachbarten Fadenwindungen der radial nächst inneren Windungslage an. An den mit VR bezeichneten Kontaktflächen liegen der Fadenabschnitt FA und die Fadenwindungen W1 bzw. W2 mit kleinen Flächenabschnitten aneinander an und auftretende Vibrationen können bei herkömmlichen Spulenanordnungen zu einer so starken lokalen Erhitzung führen, dass die aneinander liegenden Kunststoffflächen erweichen und miteinander verschmelzen, wobei gleichzeitig eine Verringerung der Reißfestigkeit des Fadens an dieser Stelle auftritt. Fig. 4(B) zeigt eine entsprechende Situation, bei welcher der Fadenabschnitt FA an einer axial benachbarten Fadenwindung WA und einer radial benachbarten Fadenwindung WR anliegt und mit diesen wieder kleine Kontaktflächen VR mit der durch die Erfindung stark verminderten Gefahr der Kunststoffverschweißung bildet.

Durch die erfindungsgemäßen Mittel zur Vibrationsdämpfung, insbesondere durch Umlenkung des Fadens über eine Umlenkfläche wird die bis zum Fadenabschnitt FA übertragene Vibrationsleistung erheblich gedämpft, so dass die Gefahr von für eine Verschweißung ausreichender Erhitzung erheblich verringert wird.

Die Erfindung ist nicht auf die beschriebenen Ausführungsbeispiele beschränkt, sondern im Rahmen fachmännischen Könnens auf mancherlei Weise abwandelbar. Insbesondere können auch andere Dämpfungsmaßnahmen als eine Fadenumlenkung vorgesehen sein.

## Patentansprüche

1. Fadentrimmer mit einer Fadenspule,
welche in einem von einem Antriebsmotor rotierend antreibbaren Spulenhalter (TR) drehbar und entnehmbar angeordnet ist und einen zu einer Mehrzahl von Windungen aufgewickelten Schneidfaden aus Kunststoff enthält, welcher durch eine Fadendurchführungsöffnung (OF) des Spulenhalters (TR) radial nach außen geführt ist und radial außerhalb des Spulenhalters ein bei rotierendem Spulenhalter (TR) durch Fliehkräfte gespanntes frei fliegendes Fadenende (FF) aufweist,
wobei sich um die Fadendurchführungsöffnung (OF) eine Hülse (HU) befindet, welche im Spulenhalter (TR) eine gekrümmte Anlagefläche (HF) für den Schneidfaden bildet,
wobei zwischen Fadendurchführungsöffnung (OF) des Spulenhalters (TR) und der Fadenwicklung (SW) auf der Spule Vibrationsdämpfungsmittel im Verlauf des Schneidfadens angeordnet sind und die Ausbreitung von Vibrationen längs des Schneidfadens dämpfen,
und wobei die Vibrationsdämpfungsmittel zwischen der Fadendurchführungsöffnung (OF) und dem Spulenwickel (SW) eine zusätzliche Reibfläche in Form einer Umlenkfläche (UF) umfassen, an welcher der Schneidfaden anliegt,
wobei die Umlenkfläche (UF) derart positioniert ist, dass der Umlenkwinkel des Schneidfadens am Hülsenrand von der Fadenrichtung in der Fadendurchführungsöffnung (OF) zur Richtung des Fadenabschnitts (FZ), zwischen der Umlenkfläche (UF) und der Anlagefläche (HF) an der Hülse (HU) mehr als 60° beträgt,
wobei die Vibrationsdämpfungsmittel eine Umlenkstruktur umfassen, welche den Schneidfaden von einem kürzesten Verlauf zwischen Fadendurchführungsöffnung (OF) und Spulenwickel (SW) abweichend über die Umlenkfläche (UF) führen,
wobei die Umlenkfläche (UF) eine kontinuierliche Krümmung um eine zur Drehachse der Spule parallele Krümmungsachse mit einem mittleren Krümmungsradius besitzt,
wobei der mittlere Krümmungsradius kleiner ist als 40 % des kleinsten Windungsradius des Spulenwickels (SW), insbesondere kleiner als 30 %, vorzugsweise kleiner als 20 % des kleinsten Windungsradius (RWmin), und wobei die Umlenkfläche (UF) von der Anlagefläche (HF) in Umfangsrichtung um die Rotationsachse (RA) um einen Winkel (WZ) versetzt ist und wobei der Winkel (WZ) kleiner als 50° ist und wobei der mittlere Krümmungsradius der Umlenkfläche (UF) zwischen dem 2-fachen und dem 0,5-fachen des mittleren Krümmungsradius der Anlagefläche (HF) liegt, wobei die Vibrationsdämpfungsmittel die Reibfläche oder mehrere Reibflächen im Verlauf des Schneidfadens zwischen der Fadendurchführungsöffnung (OF) und dem Spulenwickel (SW) zusätzlich zu der vorhandenen Anlagefläche des Schneidfadens am Rand der Fadendurchführungsöffnung umfassen,
**dadurch gekennzeichnet, dass** die zusätzlichen Reibflächen eine zusätzliche Reibungskraft gegen Längsbewegung des Schneidfadens bewirken, welche wenigstens 20 %, insbesondere wenigstens 30 %, vorzugsweise wenigstens 40 % der an der Fadendurchführungsöffnung (OF) auf dem Schneidfaden maximal wirkenden Fliehkraft beträgt, welche am Durchtritt des Schneidfadens durch die Fadendurchführungsöffnung (OF) auftritt und die durch die maximal, typischerweise im Leerlauf auftretende Drehzahl des Spulenhalters (TR) und die Masse des frei fliegenden Fadenendes (FF) voller Länge bestimmt ist.

2. Fadentrimmer nach einem der vorhergehenden Ansprüche, **dadurch gekennzeichnet, dass** die Umlenkfläche (UF) um einen Winkel (WZ) von wenigstens 5°, insbesondere wenigstens 10°, vorzugsweise wenigstens 15° um die Drehachse der Spule gegen die Anlage des Schneidfadens am inneren Rand der Fadendurchführungsöffnung (OF) versetzt ist.

## Claims

1. A string trimmer with a line spool, which is arranged rotatably and removably in a spool holder (TR) rotatably driven by a drive motor, and contains a cutting line made from plastic and wound up into a plurality of windings, the cutting line is guided radially outward through a line feed-through opening (OF) of the spool holder (TR) and has a free-flying thread end (FF) radially outside of the spool holder and centrifugally tensioned due to the rotating spool holder (TR),
wherein a sleeve (HU) is located around the line feed-through opening (OF) and forms a curved contact surface (HF) in the spool holder (TR) for the cutting line,
wherein vibration damping means, which damp the propagation of vibrations along the cutting line, are arranged on the spool over the course of the cutting line between the line feed-through opening (OF) of the spool holder (TR) and the coil winding (SW),
and wherein, between the line feed-through opening (OF) and the coil winding (SW), the vibration damping means comprise an additional friction surface in the form of a deflection surface (UF), which the cutting line contacts,
wherein the deflection surface (UF) is positioned in such a way that the deflection angle of the cutting line at the sleeve edge is more than 60º from the line direction in the line feed-through opening (OF) to the direction of the line section (FZ) between the deflection surface (UF) and the contact surface (HF) at the sleeve (HU),
wherein the vibration damping means comprise a deflection structure which guides the cutting line via the deflection surface (UF) to deviate from a shortest course between the line feed-through opening (OF) and the coil winding (SW), wherein the deflection surface (UF) has a continuous curve with an average radius of curvature about an axis of curvature parallel to the axis of rotation of the coil,
wherein the average radius of curvature is less than 40% of the smallest winding radius of the coil winding (SW), in particular less than 30%, preferably less than 20% of the smallest winding radius (RWmin), and wherein the deflection surface (UF) is offset from the contact surface (HF) in the peripheral direction about the axis of rotation (RA) by an angle (WZ), wherein the angle (WZ) is less than 50º, and wherein the average radius of curvature of the deflection surface (UF) lies between twofold and 0.5 times the average radius of curvature of the contact surface (HF),
wherein the vibration damping means comprise the friction surface or multiple friction surfaces over the course of the cutting line between the line feed-through opening (OF) and the coil winding (SW) in addition to the contact surface, present at the edge of the line feed-through opening for the cutting line,
**characterized in that**
the additional friction surfaces cause an additional friction force, with respect to the longitudinal movement of the cutting line, which is at least 20%, in particular at least 30%, preferably at least of 40% of the maximum centrifugal force acting on the cutting line at the line feed-through opening (OF), said centrifugal force occurs at the passage of the cutting line through the line feed-through opening (OF), and is determined by the maximum rotational speed of the spool holder (TR), typically occurring during idle speed, and the mass of the full length of the free-flying line end (FF).

2. A string trimmer according to one of the preceding claims, **characterized in that** the deflection surface (UF) is offset by an angle (WZ) of at least 5º, in particular at least 10º, preferably at least 15º about the axis of rotation of the coil with respect to the contact of the cutting line on the inner edge of the line feed-through opening (OF).

## Revendications

1. Coupe-fil avec une bobine de fil, placée de manière rotative et amovible dans un support de bobine (TR) pouvant être entraîné de manière rotative par un moteur d'entraînement et contenant un fil de coupe en plastique enroulé sur plusieurs enroulements, guidé vers l'extérieur de manière radiale par une ouverture de déroulement de fil (OF) du support de bobine (TR) et présentant de manière radiale, en dehors du support de bobine, une extrémité de fil (FF) libre tendue par des forces centrifuges lorsque le support de bobine (TR) tourne, dans lequel se trouve, autour de l'ouverture de déroulement de fil (OF), une coque (HU) formant, dans le support de bobine (TR), une surface de contact courbe (HF) pour le fil de coupe, dans lequel, entre l'ouverture de déroulement de fil (OF) du support de bobine (TR) et l'enroulement du fil (SW) sur la bobine, des amortisseurs de vibrations sont placés sur le passage du fil de coupe et atténuent la propagation des vibrations le long du fil de coupe et dans lequel les amortisseurs de vibrations entre l'ouverture de déroulement de fil (OF) du support de bobine (TR) et l'enroulement du fil (SW) comprennent une surface de frottement supplémentaire se présentant sous forme de surface de déviation (UF) sur laquelle repose le fil de coupe, la surface de déviation (UF) étant positionnée de manière à ce que l'angle de déviation du fil de coupe sur le bord de la coque, entre le sens du fil dans l'ouverture de déroulement de fil (OF) et le sens du segment de fil (FZ), entre la surface de déviation (UF) et la surface de contact (HF) sur la coque (HU) soit supérieur à 60°, les amortisseurs de vibrations comprenant une structure de déviation déviant le fil de coupe à partir d'un passage au plus court, entre l'ouverture de déroulement de fil (OF) et l'enroulement de la bobine (SW), sur la surface de déviation (UF), la surface de déviation (UF) possédant une courbure continue autour d'un axe de courbure parallèle à l'axe de rotation de la bobine avec un rayon de courbure moyen, le rayon de courbure moyen étant inférieur à 40 % du plus petit rayon d'enroulement de l'enroulement de la bobine (SW) et est notamment inférieur à 30 % et idéalement à 20 % du plus petit rayon d'enroulement (RWmin), et la surface de déviation (UF) de la surface de contact (HF) étant décalée, dans le sens de la circonférence autour de l'axe de rotation (RA), d'un certain angle (WZ), l'angle (WZ) étant inférieur à 50° et le rayon de courbure moyen de la surface de déviation (UF) étant compris entre 2 fois et 0,5 fois le rayon de courbure moyen de la surface de contact (HF), les amortisseurs de vibrations comprenant une surface de frottement ou plusieurs surfaces de frottement sur le passage du fil de coupe entre l'ouverture de déroulement de fil (OF) et l'enroulement de la bobine (SW), en plus de la surface de contact du fil de coupe existant sur le bord de l'ouverture de déroulement de fil,
**caractérisé en ce que** les surfaces de frottement supplémentaires exercent une force de frottement supplémentaire s'opposant au déplacement longitudinal du fil de coupe étant au moins égale à 20 %, notamment au moins à 30 %, idéalement au moins à 40 % de la force centrifuge maximale s'exerçant, dans l'ouverture de déroulement de fil (OF), sur le fil de coupe et apparaissant au passage du fil de coupe dans l'ouverture de déroulement de fil (OF) et qui est déterminée par la vitesse de rotation maximale, généralement en fonctionnement à vide, du support de bobine (TR) et par la masse de l'extrémité libre (FF) sur toute la longueur.

2. Coupe-fil selon l'une quelconque des revendications précédentes, **caractérisé en ce que** la surface de déviation (UF) est décalée d'un angle (WZ) d'au moins 5°, notamment d'au moins à 10%, idéalement d'au moins 15° autour de l'axe de rotation de la bobine, contre le système du fil de coupe sur le bord intérieur dans l'ouverture de déroulement de fil (OF).
